(19) Europäisches Patentamt
European Patent Office
Office européen des brevets

(11) Veröffentlichungsnummer: **0 159 518**
**A1**

(12) # EUROPÄISCHE PATENTANMELDUNG

(21) Anmeldenummer: **85102908.2**

(22) Anmeldetag: **14.03.85**

(51) Int. Cl.⁴: **G 01 N 31/16**, G 01 N 33/18

(30) Priorität: **27.03.84 DE 3411181**

(43) Veröffentlichungstag der Anmeldung: **30.10.85 Patentblatt 85/44**

(84) Benannte Vertragsstaaten: **BE CH DE FR GB IT LI NL**

(71) Anmelder: **Merck Patent Gesellschaft mit beschränkter Haftung, Frankfurter Strasse 250, D-6100 Darmstadt (DE)**

(72) Erfinder: **Fischer, Wolfgang, Dr., Kröhweg 27, D-6100 Darmstadt (DE)**
Erfinder: **Krenn, Karl-Dieter, Zieglerstrasse 41, D-6102 Pfungstadt (DE)**

(54) **Karl-Fischer-Reagenz und Verfahren zur Bestimmung von Wasser mit Hilfe dieses Reagenzes.**

(57) Ein neues Karl-Fischer-Reagenz enthält als Pyridinersatz mindestens eine Verbindung der allgemeinen Formel

$$R^3-[O-\overset{R^1}{\overset{|}{C}}H-(CH_2)_n-\overset{R^2}{\overset{|}{C}}H]_m-O^{\ominus}X^{\oplus}$$

worin

$R^1$ und $R^2$, die gleich oder verschieden sein können, = Wasserstoff oder Alkyl mit 1–6 C-Atomen,

$R^3$ = Alkyl mit 1–6 C-Atomen,

X = Alkalimetallion oder ein Äquivalent eines Erdalkalimetallions,

n = 0 oder eine Zahl von 1 bis 4 und

m = eine Zahl von 1 bis 4

bedeutet.

EP 0 159 518 A1

0159518

Merck Patent Gesellschaft
mit beschränkter Haftung
Darmstadt

# Karl-Fischer-Reagenz und Verfahren zur Bestimmung von Wasser mit Hilfe dieses Reagenzes

Die Erfindung betrifft ein modifiziertes Karl-Fischer-Reagenz zur Bestimmung von Wasser, das einen Pyridinersatz, Schwefeldioxid und Jod enthält, sowie ein Verfahren zur Bestimmung von Wasser mit Hilfe dieses Reagenzes.

Aus der Literatur ist eine Reihe von Vorschlägen bekannt, Pyridin im Karl-Fischer-Reagenz durch andere Substanzen zu ersetzen. In Anal. Chim. Acta 94, 395 (1977) wird Natriumacetat als Ersatz für Pyridin verwendet. Dieser Ersatz bringt jedoch gewisse Nachteile mit sich. Es bildet sich z.B. mit dem als Lösungsmittel verwendeten Alkohol Essigsäureester, wobei Wasser frei wird, das bei einer Wasserbestimmungsmethode naturgemäß stört. Die Lösungen sind deshalb nicht stabil, ihr Blindwert nimmt stetig zu.

Im GB-Patent 728 947 sind außer Acetaten auch Alkoholate, Phenolate und Metallsalze schwacher organischer Säuren als Ersatz für Pyridin genannt. Die Überprüfung der in der Patentschrift genannten Substanzen ergab, daß diese als Pyridinersatz ungeeignet sind, teils wegen nicht ausreichender Löslichkeit, teils wegen nicht genügender Stabilität der Fertiglösungen. Bereits nach kurzer Zeit bilden sich Niederschläge oder der Titer der Lösung fällt schnell ab.

Um diese Nachteile zu umgehen, wurde in neuester Zeit versucht, Pyridin durch aliphatische Amine in einem bestimmten Molverhältnis zu Schwefeldioxid oder auch durch heterocyclische Verbindungen zu ersetzen (EP 35 066). Aber auch dieser Pyridinersatz weist noch Nachteile auf, weil die Stabilität des Endpunktes mit der Menge des zu titrierenden Wassers schwankt. Mit diesen Reagenzien gelingt es zwar, den unangenehmen Pyridingeruch vom Anwender fernzuhalten, die als Pyridinersatz verwendeten Stickstoffverbindungen sind meist jedoch immer noch toxisch.

Der Erfindung lag die Aufgabe zugrunde, ein modifiziertes Karl-Fischer-Reagenz zur Verfügung zu stellen, das stabil ist, exakte Analysenergebnisse liefert und einen möglichst stabilen Endpunkt auch bei variabler Wassermenge zeigt und möglichst wenig toxisch ist.

Überraschenderweise wurde gefunden, daß ein solches Karl-Fischer-Reagenz erhalten werden kann, wenn anstelle von Pyridin bzw. dem aus dem Stand der Technik bekannten Pyridinersatz Salze von einseitig veretherten Diolen verwendet werden.

Diese Substanzen sind in der Reagenzlösung gut löslich, derartige Lösungen sind lagerstabil und zeigen stabile Endpunkte auch bei der Titration über einen großen Wasserbereich.

Gegenstand der Erfindung ist ein Karl-Fischer-Reagenz zur Bestimmung von Wasser, enhaltend einen Pyridinersatz, Schwefeldioxid und Jod, das dadurch gekennzeichnet ist, daß als Pyridinersatz mindestens eine Verbindung der allgemeinen Formel

$$R^3-[O-\overset{\overset{\large R^1}{|}}{C}H-(CH_2)_n-\overset{\overset{\large R^2}{|}}{C}H]_m-O^{\ominus}X^{\oplus}$$

vorliegt, wobei

$R^1$ und $R^2$, die gleich oder verschieden sein können, = Wasserstoff oder Alkyl mit 1-6 C-Atomen,

$R^3$ = Alkyl mit 1-6 C-Atomen,

X = Alkalimetallion oder ein Äquivalent eines Erdalkalimetallions,

n = 0 oder eine Zahl von 1 bis 4 und

m = eine Zahl von 1 bis 4

bedeutet.

Ferner betrifft die Erfindung ein Verfahren zur Bestimmung von Wasser mit Hilfe des genannten Karl-Fischer-Reagenzes.

Das erfindungsgemäße Karl-Fischer-Reagenz liegt vorzugsweise als sogenanntes Einkomponentenreagenz vor, das alle Bestandteile in einer einzigen Lösung enthält.

Dieses ist ausreichend stabil, um in üblicher Weise als Titrierflüssigkeit eingesetzt zu werden. Das Einkomponentenreagenz ist besonders dann von Vorteil, wenn die zu untersuchende Substanz in einem anderen Lösungsmittel besser löslich ist als im Lösungsmittel des Reagenzes. In diesem Fall ist auch die Reaktionsgeschwindigkeit nicht von der Lösegeschwindigkeit abhängig. Es ist natürlich auch möglich, das erfindungsgemäße Karl-Fischer-Reagenz als sogenanntes Zweikomponentenreagenz einzusetzen, das dann aus zwei Lösungen, einem Lösemittel und einem Titriermittel besteht. Das Lösemittel enthält Schwefeldioxid und den Pyridinersatz in einem Lösungsmittel und dient zur Aufnahme der auf ihren Wassergehalt zu untersuchenden Probe. Das Titriermittel ist eine auf einen konstanten Titer eingestellte Lösung von Jod in einem Lösungsmittel.

Geeignete Pyridinersatzmittel nach der Erfindung sind Salze von einseitig veretherten Diolen. Bevorzugt sind solche der allgemeinen Formel

$$R^3-[O-\overset{\displaystyle R^1}{\overset{|}{C}H}-(CH_2)_n-\overset{\displaystyle R^2}{\overset{|}{C}H}]_m-O^{\ominus}Na^{\oplus}$$

wobei

$R^1$ und $R^2$, die gleich oder verschieden sein können, = Wasserstoff oder Alkyl mit 1-4 C-Atomen,

$R^3$ = Alkyl mit 1-4 C-Atomen und

n = 0 oder 1 und

m = 1 oder 2 bedeutet.

Besonders bevorzugt für das erfindungsgemäße Reagenz sind die Alkali- und Erdalkalimetallsalze von Ethylenglykolmonomethylether, -monoethylether, -monopropylether, -monobutylether sowie der entsprechenden Monoalkylether der 1,2- und 1,3-Propandiole, der 1,2-, 1,3-, 2,3- und 1,4-Butandiole, insbesondere von Ethylenglykolmonomethylether, 3-Methoxypropanol und 4-Methoxybutanol. Von den Salzen der Derivate des Di- und Triethylenglykols sind die der Monomethyl- und Monoethylether besonders bevorzugt.

Zur Herstellung der erfindungsgemäßen Karl-Fischer-Reagenzien können die einseitig veretherten Diolate in einem dafür geeigneten Lösungsmittel aufgelöst werden. Zweckmäßigerweise verwendet man hierbei die den Diolaten entsprechenden einseitig veretherten Diole. Besonders günstig ist es auch, derartige Lösungen in der Weise herzustellen, daß man eine bestimmte Menge des jeweiligen Alkali- oder Erdalkalimetalles in einem der einseitig veretherten Diole auflöst.

In diesen Diolat-Lösungen wird dann die notwendige Menge Schwefeldioxid gelöst und diese im Falle der sogenannten Einkomponentenreagenzien zusätzlich noch mit Jod versetzt.

Das molare Verhältnis von erfindungsgemäßer Verbindung zu Schwefeldioxid sollte im Bereich von etwa 1:0,7 bis 1,5, vorzugsweise von etwa 1:0,9 bis 1:1,2 liegen.

Im übrigen sind als Lösungsmittel für das Reagenz bzw. für die Titration grundsätzlich alle in der Literatur für diesen Zweck beschriebenen Lösungsmittel geeignet.

Durch die Verwendung der erfindungsgemäßen Pyridinersatzmittel ergeben sich eine Reihe von Vorteilen: Der Umschlag am Äquivalenzpunkt ist deutlicher und stabiler als mit den herkömmlichen Karl-Fischer-Reagenzien; das Reagenz hat eine bessere Löslichkeit und damit eine größere Anwendungsbreite, es ist insgesamt umweltfreundlicher, weniger toxisch und preiswert.

Mit dem erfindungsgemäßen Karl-Fischer-Reagenz kann der Endpunkt der maßanalytischen Wasserbestimmung visuell, photometrisch oder elektrometrisch (Dead-Stop-Methode, coulometrische Methode) bestimmt werden. Das Reagenz eignet sich sowohl für den Einsatz im Titrierautomaten als auch als Feldmethode. Die Titration erfolgt generell unter Ausschluß von Luftfeuchtigkeit. Bervorzugt ist heute die elektrometrische Titration, insbesondere die sogenannte Dead-Stop-Methode.

Die Erfindung wird durch die folgenden Beispiele näher erläutert.

Beispiel 1

In 1 l Ethylenglykolmonomethylether werden 51 g Natrium gelöst. Dieser Lösung werden unter Rühren nacheinander 140 g Schwefeldioxid und 130 g Jod hinzugefügt.

Die auf ihren Wassergehalt zu untersuchende Probe wird in 20 ml Ethylenglykolmonomethylether gelöst und mit der obigen Lösung titriert. 1 ml der Lösung zeigt 6,5 mg Wasser an.

Beispiel 2

In 1 l 3-Methoxypropanol werden 26 g Natrium gelöst. Unter Rühren werden nacheinander 73 g Schwefeldioxid und 65 g Jod hinzugefügt.

Die auf ihren Wassergehalt zu untersuchende Probe wird in 20 ml Methanol gelöst und mit der obigen Lösung titriert. Der Faktor der Lösung beträgt 3,0.

Beispiel 3

In 1 l 4-Methoxybutanol werden 52 g Natrium gelöst. Unter Rühren werden nacheinander 118 g Schwefeldioxid und 120 g Jod hinzugefügt.

Die auf ihren Wassergehalt zu untersuchende Probe wird in 20 ml Methanol gelöst und mit der obigen Lösung titriert. Der Faktor der Lösung beträgt 4,5.

Beispiel 4

In 1 l Diethylenglykolmonoethylether werden 48 g Natrium gelöst. Unter Rühren werden nacheinander 110 g Schwefeldioxid und 110 g Jod hinzugefügt.

Die auf ihren Wassergehalt zu untersuchende Probe wird in 20 ml Methanol gelöst und mit der obigen Lösung titriert. Der Faktor der Lösung beträgt 4,4.

Merck Patent Gesellschaft
mit beschränkter Haftung
Darmstadt

## Patentansprüche

1. Karl-Fischer-Reagenz zur Bestimmung von Wasser, enthaltend einen Pyridinersatz, Schwefeldioxid und Jod, dadurch gekennzeichnet, daß als Pyridinersatz mindestens eine Verbindung der allgemeinen Formeln

$$R^3-[O-\overset{R^1}{\overset{|}{C}}H-(CH_2)_n-\overset{R^2}{\overset{|}{C}}H]_m-O^{\ominus}X^{\oplus}$$

vorliegt, wobei

$R^1$ und $R^2$, die gleich oder verschieden sein können, = Wasserstoff oder Alkyl mit 1-6 C-Atomen,

$R^3$ = Alkyl mit 1-6 C-Atomen,

X = Alkalimetallion oder ein Äquivalent eines Erdalkalimetallions,

n = 0 oder eine Zahl von 1 bis 4 und

m = eine Zahl von 1 bis 4

bedeutet.

2. Karl-Fischer-Reagenz nach Anspruch 1, dadurch gekennzeichnet, daß als Pyridinersatz mindestens eine Verbindung der Formel

$$R^3-[O-\overset{R^1}{\overset{|}{C}}H-(CH_2)_n-\overset{R^2}{\overset{|}{C}}H]_m-O^{\ominus}Na^{\oplus}$$

vorliegt, wobei

$R^1$ und $R^2$, die gleich oder verschieden sein können, = Wasserstoff oder Alkyl mit 1-4 C-Atomen,

$R^3$ = Alkyl mit 1-4 C-Atomen,

n = 0 oder 1 und

m = 1 oder 2

bedeutet.

3. Verfahren zur Bestimmung von Wasser mit Hilfe des Karl-Fischer-Reagenzes nach den Ansprüchen 1 und 2.

Europäisches Patentamt

# EUROPÄISCHER RECHERCHENBERICHT

0159518

Nummer der Anmeldung

EP 85 10 2908

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 046 819 (J.T.BAKER CHEMICALS B.V.)<br>--- | | G 01 N 31/16<br>G 01 N 33/18 |
| A | EP-A-0 086 994 (MERCK PATENT GmbH)<br>--- | | |
| D,A | GB-A- 728 947 (J.H.VAN DER MEULEN)<br>----- | | |
| | | | RECHERCHIERTE SACHGEBIETE (Int. Cl.4) |
| | | | G 01 N |

Der vorliegende Recherchenbericht wurde für alle Patentansprüche erstellt.

| Recherchenort | Abschlußdatum der Recherche | Prüfer |
|---|---|---|
| DEN HAAG | 05-07-1985 | MEYLAERTS H. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82